(19) **Europäisches Patentamt European Patent Office Office européen des brevets**

(11) **EP 3 455 656 B1**

(12) **EUROPEAN PATENT SPECIFICATION**

(45) Date of publication and mention of the grant of the patent:
**02.10.2019 Bulletin 2019/40**

(21) Application number: **17730750.1**

(22) Date of filing: **09.06.2017**

(51) Int Cl.:
$G01V\ 99/00^{(2009.01)}$     $E21B\ 49/00^{(2006.01)}$

(86) International application number:
**PCT/EP2017/064195**

(87) International publication number:
**WO 2017/212056 (14.12.2017 Gazette 2017/50)**

(54) **A METHOD AND DEVICE FOR OPTIMIZING A MODELLING OF FLOWS WITHIN A RESERVOIR FOR OPTIMIZATION OF OIL/GAS PRODUCTION**

VERFAHREN UND VORRICHTUNG ZUR OPTIMIERUNG EINER STRÖMUNGSMODELLIERUNG INNERHALB EINES SPEICHERS ZUR OPTIMIERUNG DER ÖL-/GASPRODUKTION

PROCÉDÉ ET DISPOSITIF POUR OPTIMISER UNE MODÉLISATION DE FLUX DANS UN RÉSERVOIR EN VUE DE L'OPTIMISATION DE LA PRODUCTION DE PÉTROLE/DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2016 EP 16305686**

(43) Date of publication of application:
**20.03.2019 Bulletin 2019/12**

(73) Proprietor: **Total SA**
**92400 Courbevoie (FR)**

(72) Inventors:
- **BERGEY, Pierre**
  **64000 PAU (FR)**
- **EBERLE, Nicolas**
  **64000 PAU (FR)**

(74) Representative: **Cabinet Plasseraud**
**66, rue de la Chaussée d'Antin**
**75440 Paris Cedex 09 (FR)**

(56) References cited:
**WO-A1-2008/036982     US-A1- 2012 179 436**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

The present invention relates to simulation optimization especially for modeling a multiphase flow within an oil/gas reservoir (porous medium) and from wells positioned within such reservoir.

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

The flow modeling algorithms are often used to predict fluid flows at wells and within a reservoir and / or to improve knowledge of model input through an inversion process.

The input of a reservoir flow simulator consists in:

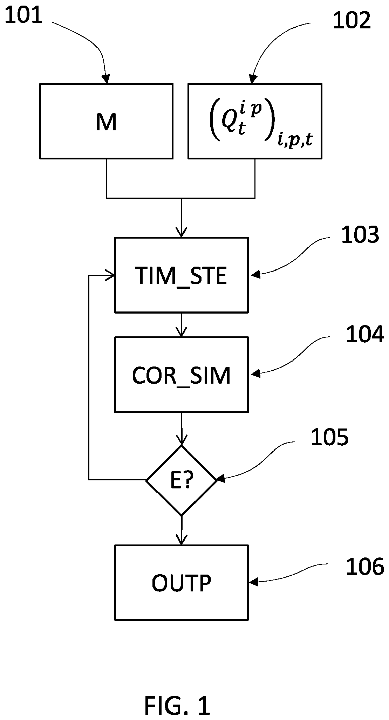

- A "static" reservoir model (M or element 101 of Figure 1). Such reservoir model is typically comprised of a cellular grid, associated cell properties and model scale properties.

- One or two time-dependent simulation controls corresponding respectively to the history and forecast periods. Time dependent controls are provided relative to time intervals between control dates. Such time intervals are often labeled as "*control steps*" ( $Q_t^{i\,p}$ or element 102 of Figure 1, where i being the number of the control (or well number), t being the time, p being the phase number of the fluid (e.g. the oil, the water, the gas, etc.)) : a set of control steps be named as "*control data*".

The basic output of a reservoir flow simulator consists in a series of time-dependent reservoir and well(s) flow states (element 106 of Figure 1).

In order to be able to provide such output, the simulator often has a stepping module (element 103 of Figure 1) and a core simulation module (element 104 of Figure 1).

The time stepping module is designed to determine the accurate "time steps" for an iterative simulation performed by the core simulation module.

A time step is limited by two simulations dates. Time steps are distinct from control steps.

For each "*time step*" within a period to be simulated, the core simulation module provides a flow modeling of the reservoir that may satisfy well and reservoir controls (such as the flow at wells, pressure, temperature, etc.) or at least a mean of such well and reservoir controls during the considered time step: the flow modeling being a forecast/reconstruction of well and flow states applicable to the considered time step. When the core simulation module has provided the flow modeling for one given step (test 105 of Figure 1), the process is reiterated (i.e. redetermination of the next time step and core simulation of said new step) until the end of the period to be simulated.

The determination of the accurate time step is a key component of the global simulation.

Most of the time, the time steps are determined based on time-dependent heuristic, e.g.:

- the time steps are determined to fulfil a maximum duration criterion, such as *"the simulation should last no more than 48 hours"*. If the maximum duration criterion is not fulfilled (e.g. the simulation is expected to last more than 48 hours), the time steps are increased so that the number of steps is limited.

- the time steps are also determined to fulfil a minimum duration criterion, such as "*the simulation should last at least 24 hours*". If the minimum duration criterion is not fulfilled (e.g. the simulation is expected to last 12 hours), the time steps are decreased so that the number of steps is increased.

Nevertheless, these methods of time stepping are only driven by duration/time consideration.

Another time stepping method may be an *a priori* setting by the user: for instance, the user may indicate to the simulation algorithm that N steps should be performed (with N, an integer).

This latter method is only driven by a subjective approach. Therefore, the simulation process can certainly be very poor if the user set the number of steps incorrectly.

Another method (i.e. "*flexible stepping logic*") determines the time step of a given period based on a convergence function of the simulation for the previous determined time step: therefore, if the simulation for the previous determined time step was very complex (i.e. the time for convergence of the simulation was quite long), the new time step may be determined according to the previous determined time step. Therefore, due to convergence issue, this time stepping method may choose quite a long time step, regardless the accuracy/quality of the simulation.

There is thus a need to provide a time stepping to take into account a quality criterion for the simulation. Indeed, improving the simulation (e.g. the simulated pressure frequency content) is of particular importance for inverting the static model based upon a comparison between simulated and observed flows in well or reservoir observations (history matching) and for representing transient effects in well and flow lines.

Examples and possible embodiments of the pri-

or art may be found in US 2012/179436 A1 or WO 2008/036982 A1.

## SUMMARY OF THE INVENTION

The invention relates to a method for optimizing a modeling of flows within a reservoir for optimization of oil/gas production, said modeling comprising a determination of a time step within a simulation period, the method comprising:

/a/ receiving a first time step;

/b/ receiving control data applicable to said simulation period and comprising flow condition for at least one well connected to the reservoir;

/c/ selecting data corresponding to the control data and that is applicable to the first time step;

/d/ determining at least one quality value based on the selected data;

/e/ if a quality criterion is not met based on the quality value, determining a second time step within the first time step and reiterating step /c/ to /e/ with the second time step as the first time step;

/f/ if the quality criterion is met based on the quality value, performing a modeling of flows within the reservoir based on said first time step.

A flow condition is a time-dependent set of data indicating the flow of the well during a period of time: the flow condition may comprise flows (per phase and or global flows), pressure, and/or temperature and may be specific for a well/part of a well.

The control data may be derived from real historical data of the well (e.g. the real flow of the well during a former period).

The first time step may be determined by another method or predetermined by a user.

The at least one quality value is then function of the control data and is not exclusively function of the simulation complexity.

The second time step within the first time step has time boundaries inside the boundaries of the first time step. Most of the time, at least one boundary of the second time step is identical to a boundary of the first time step while the other boundary of the second time step is strictly lower than the other boundary of the first time step.

Thanks to said method, it is possible to enhance the simulation and limit the size of the time step even if convergence of the simulation is very quick. As the simulation could converge to the mean of the control data for said first time step, it is important to assess the quality of the data to be sure that the core simulation is about to converge to a value with high quality (i.e. close to the real control data).

As the simulation of flows is more accurate and takes into account the quality of the control data, it is possible to adapt/optimize the oil/gas production of well(s) connected to the reservoir. Knowing in a accurate manner the flow into the reservoir, it is also possible to determine the best possible position of new well(s) to be drilled. Therefore the oil and gas production of real oil/gas reservoir/field may be optimized.

In one possible embodiment, the determination of the quality value may comprise a determination of a root mean square error of the selected data.

Therefore, such method enables the determination of a highly variable set of control data that is not adequate for a core simulation.

In addition, the determination of the quality value may comprise a determination of a mean absolute error of the selected data.

Furthermore, the determination of the quality value may comprise a determination of a mean frequency of a frequency transform of the selected data.

This method provides a proper and efficient way to assess the variability of the control data during the first time step. In addition, said method may be physically implemented thanks to dedicated hardware.

For instance, the quality criterion may be not met if the quality value is greater than a predetermined value.

The method may further comprise:

/b2/ receiving pressure and temperature values for a bottom hole of said at least one well connected to the reservoir;

/b3/ converting the selected data based on said received pressure and temperature values.

The converted data may be used for the determination of step /d/.

By converting the control data or the selected data to the bottom hole of the well, the control data may be more relevant for the core simulation, as the core simulation manipulates data directly in the reservoir conditions, close to the bottom hole conditions of the well: as the error/quality may be expressed in the bottom hole condition, the accuracy may be better represented in the bottom hole conditions close to the reservoir conditions.

In a possible embodiment, the determination of the quality value may comprise a binarization of at least the selected data.

The binarization eases the automatic identification of the closure / opening of the well and therefore eases the positioning of the boundaries of the time step close to said closure / opening. By doing so, the error of the core simulation for said transitional period (i.e. closure / opening) may be significantly reduced.

Advantageously, the simulation period may be determined to exclude periods of time in which the at least one well ceases to have non-null flow condition or ceases to have a null flow condition.

In one example, the simulation period may be split into a plurality of simulation periods to exclude periods of time in which the at least one well ceases to have non-null flow condition or ceases to have a null flow condition.

These periods of time (i.e. periods of time in which the at least one well ceases to have non-null flow condition or ceases to have a null flow condition) may be identified as closure / opening of the well and/or as transitional period for the production of the well.

The determination of the quality value may comprise a determination of a respective quality sub-value for each of the wells, the quality value being determined based on a weighted sum of the respective quality sub-values.

Hence, respective weights of the weighted sum may be a function of a flow of each well during the first time step or the simulation period.

A second aspect of the invention relates to a device for optimizing a modeling of flows within a reservoir for optimization of oil/gas production, said modeling comprising a determination of a time step within a simulation period,

the device comprising:

/a/ an interface for receiving a first time step;

/b/ an interface for receiving control data applicable to said simulation period and comprising flow condition for at least one well connected to the reservoir;

/c/ a first circuit for executing an action of selecting data corresponding to the control data and that is applicable to the first time step;

/d/ a second circuit for executing an action of determining at least one quality value based on the selected data;

/e/ a third circuit for, if a quality criterion is not met based on the quality value, executing an action of determining a second time step within the first time step and for controlling the first circuit, the second circuit, the third circuit to execute their actions with the second time step as the first time step.

/f/ a fourth circuit for, if the quality criterion is met based on the quality value, performing a modeling of flows within the reservoir based on said first time step.

A third aspect relates to a computer program product comprising a computer-readable medium, having thereon a computer program comprising program instructions. The computer program is loadable into a data-processing unit and adapted to cause the data-processing unit to carry out the method described above when the computer program is run by the data-processing unit.

Other features and advantages of the method and apparatus disclosed herein will become apparent from the following description of non-limiting embodiments, with reference to the appended drawings.

**BRIEF DESCRIPTION OF THE DRAWINGS**

The present invention is illustrated by way of example, and not by way of limitations, in the figures of the accompanying drawings, in which like reference numerals refer to similar elements and in which:

- Figure 1 is an overview of a global simulation process that can be enabled by the invention.

- Figure 2a is a graph illustrating a first method of determination of a time step based on one possible embodiment of the invention;

- Figure 2b is a graph illustrating a second method of determination of a time step based on one possible embodiment of the invention;

- Figure 2c is a graph illustrating a third method of determination of a time step based on one possible embodiment of the invention;

- Figure 2d is a graph illustrating a fourth method of determination of a time step based on one possible embodiment of the invention;

- Figure 3a is a flow chart describing a possible embodiment of the first method of the present invention;

- Figure 3b is a flow chart describing a possible embodiment of the second method of the present invention;

- Figure 3c is a flow chart describing a possible embodiment of the third method of the present invention;

- Figure 3d is a flow chart describing a possible embodiment of the fourth method of the present invention;

- Figure 3e is an example of weighting quality values for a plurality of wells;

- Figure 4 is a possible embodiment for a device that enables the present invention.

**DESCRIPTION OF PREFERRED EMBODIMENTS**

Figure 1 is an overview of a global simulation process that can be enabled by the invention.

As described above, the simulation process comprises two main modules that iterate on a plurality of consecutive periods of time (i.e. time steps). The time step module 103 is in charge of determining the accurate time step that will be an input of the core module 104.

According to the description below, it is advantageous to enhance the time step module for increasing the accuracy of the time step module and to take into account a quality of the received control data $\left( Q_t^{i\,p} \right)_{i,p,t}$ for the determination by the core simulation module.

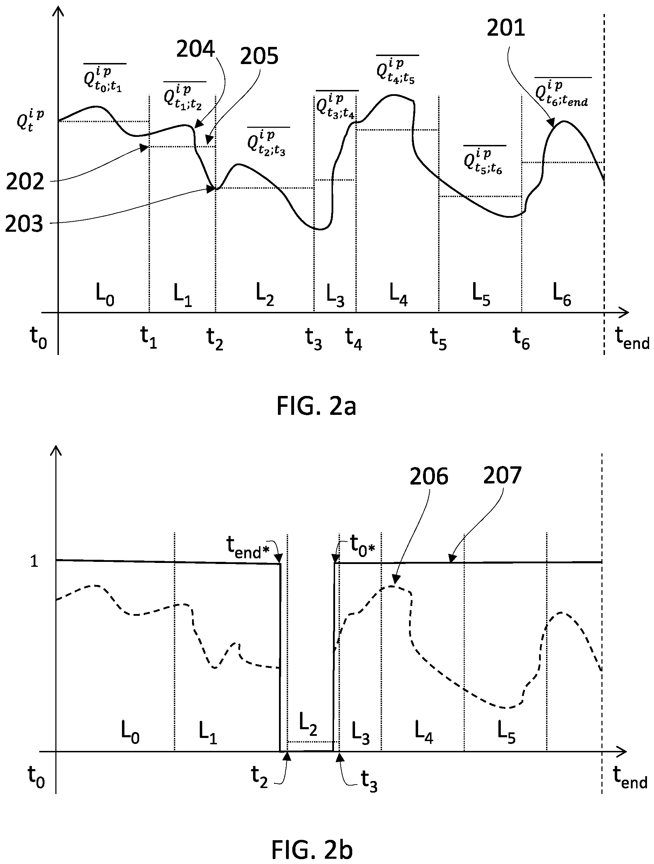

Figure 2a is a graph illustrating a first method of determination of a time step based on one possible embodiment of the invention.

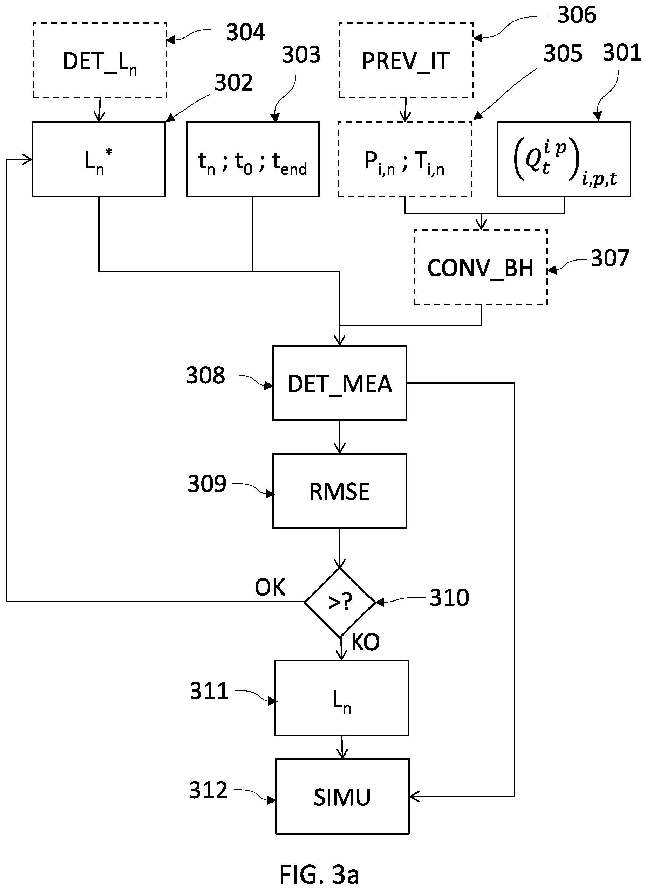

In this method, it is possible to receive the control data $\left( Q_t^{i\,p} \right)_{i,p,t}$ (step 301 of Figure 3a). This control data (for instance, the flow for a well p and for a phase i, given for a plurality of time t) may be represented as a time graph 201 (only one graph is represented in Figure 2a, for a given p and i).

In addition, it is possible to receive a provisional time step $L_n^*$ (step 302 of Figure 3a) and a set of time $t_n$, $t_0$ and $t_{end}$ (step 303 of Figure 3a).

The provisional time step $L_n^*$ can be set by the user for each iteration of step 103-104-105 as described above or can be set by an additional determination module such as implementing one of the time stepping method (step 304 of Figure Figure 3a) described above such as the "*flexible stepping logic*" or such as another method described in the present application. The present method corrects the provisional time step $L_n^*$ to provide an accurate time step $L_n$.

The time $t_n$ defines the start of the simulation time step.

The time $t_0$ defines the start of the simulation period (that includes the time steps).

The time $t_{end}$ defines the end of the simulation period (that includes the time steps).

In one embodiment, it is also possible to optionally receive pressure information $P_{i,n}$ at the bottom hole of well i and temperature information $T_{i,n}$ (step 305 of Figure 3a). This information may be set by the user (e.g. predetermined temperature and pressure) or may be derived from the previous iteration if any (step 306 of Figure 3a).

As the control data $Q_t^{i\,p}$ are often provided at the surface of the well i, it may be advantageous to convert said control data to the bottom hole with standard techniques using the pressure and temperature at the bottom hole of the given well i (step 307 of Figure 3a). If such conversion occurs, the "control data" should be understood in the following (unless otherwise mentioned) as the "converted control data" and the same notation $Q_t^{i\,p}$ is used for both. By converting the control data to the bottom hole, it is possible to have more accurate data to control the simulation of the core module / time stepping module: therefore the accuracy of the time steps could be better.

For the given provisional time step $L_n^*$, it is first possible to determine if said provisional time step $L_n^*$ ends before the finale time $t_{end}$, for instance by computing:

$$L_n^* = \min(L_n^* + t_n; t_{end}) - t_n$$

Then, for each well i and phase p, it is possible to determine the mean of the control data $Q_t^{i\,p}$ that is applicable to the provisional time step $L_n^*$ (step 308 of Figure 3a).

It should be understood that "*the control data* $Q_t^{i\,p}$ *that is applicable to the provisional time step* $L_n^*$ " means the data of the control data $Q_t^{i\,p}$ that have a time t that corresponds to the provisional time step $L_n^*$ (i.e. t being within the time limit of $L_n^*$ ). For instance, if the time step $L_1$ in Figure 2a have two time limits $t_1$ and $t_2$, it is possible to select the data of the control data $Q_t^{i\,p}$ (element 201 of Figure 2a) that is applicable to $L_1$ by selecting the data 204 which are in the interval defined by the dashed lines 202 and 203 starting from $t_1$ and $t_2$.

Once the data 204 selected, a mean $\overline{Q_{t_1;t_2}^{i\,p}}$ 205 may be easily determined.

Once the mean determined, it is possible to determine a quality value (step 309 of Figure 2a) of the control data $Q_t^{i\,p}$ compared to said mean. For instance, it is possible to compute as a quality value:

- a root mean square error of the control data $Q_t^{i\,p}$

$$\left[\frac{\sqrt{\Sigma_k\left(Q^{i\,p}_{t_k}-\overline{Q^{i\,p}_{t_1;t_2}}\right)^2}}{k}\right],$$

(i.e. , with k the index of the control data within the time step $L^*_n$ )

- a mean absolute error of the control data $Q^{i\,p}_t$ (i.e.

$$\frac{\left[\Sigma_k\left|Q^{i\,p}_{t_k}-\overline{Q^{i\,p}_{t_1;t_2}}\right|\right]}{k},$$

index of the control data within the time step $L^*_n$ )

- the surface between the control data curve 204 and the mean 205 divided by the length of the time step $L^*_n$.

The quality value is based on the control data itself and is not exclusively derived from time / duration consideration (of the simulation).

Therefore the quality value is intrinsically linked to the control data.

In the previous examples:

- if the quality value is high, it means that the control data is not close to its mean, i.e. the control data varies a lot in the time step $L^*_n$;

- if the quality value is low (i.e. close to zero), it means that the control data is close to its mean, i.e. the control data does not vary a lot in the time step $L^*_n$.

Here, the computed quality value is decreasing with the quality of the data. The best the data is, the lower the quality value is.

As a consequence, the determination heuristic may be:

- if the quality value is greater than a predetermined value (step 310 of Figure 3a, output OK), the provisional time step $L^*_n$ is shorten and the process described in step 308 and 309 of Figure 3a is reiterated.

- if the quality value is lower than the predetermined value (step 310 of Figure 3a, output KO), the provisional time step $L^*_n$ is taken as the time step $L_n$ (step 311 of Figure 3a) for the simulation by the core module (step 312 of Figure 3a). In addition, the last computed mean of step 308 may be input to the core module as the simulation may try to satisfy said mean as control data for the time step $L_n$.

It is also possible that a computed quality value is increasing with the quality of the data (for instance, by computing the inverse of the previous quality data). Therefore, determination heuristics may be adapted by replacing "greater" by "lower" and vis-et-versa.

The same process may be reiterated with the time steps $L_0$, $L_2$, $L_3$, $L_4$, $L_5$, $L_6$. As the start of the time steps may be a function of the previous time steps, it may be advantageous to iterate the process according to the time order of the time step.

It is noted that the quality value may be a dimensionless number, a number or a percentage or any other metrics.

Figure 2b is a graph illustrating a second method of determination of a time step based on one possible embodiment of the invention.

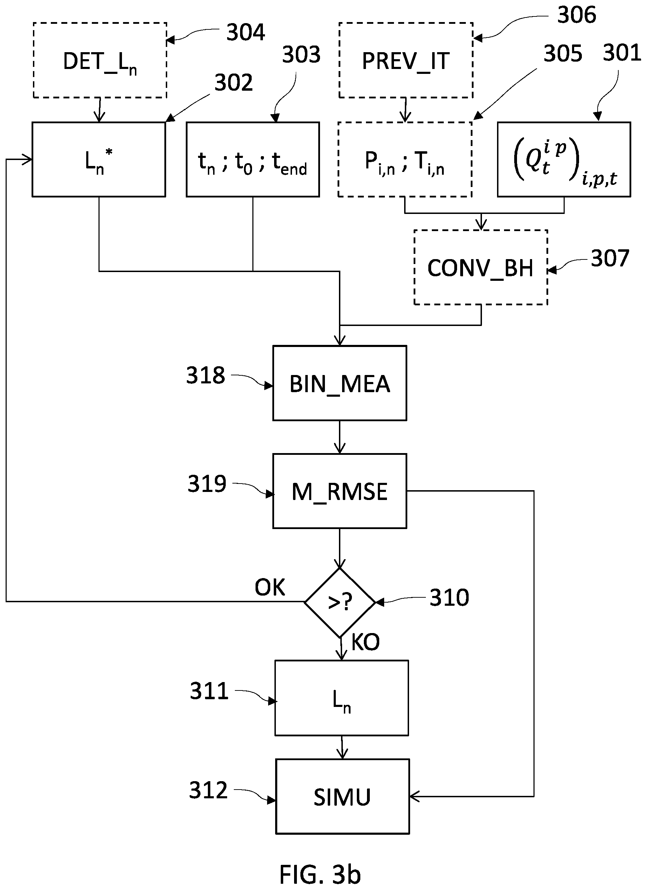

In Figure 2b, the process used is very close to the process that is used for Figure 2a: therefore, the flowchart of Figure 3b is identical to the flowchart of Figure 3a (and its associated description applies) as long as the numerical references are identical.

In this example, the production of the well i may be stopped between time $t_{end}^*$ and $t_0^*$, i.e. the flow condition of the well i is equal to 0 for a period of time $[t_{end}^*-t_0^*]$: the well i ceases to have non-null flow condition at time $t_{end}^*$ and ceases to have a null flow condition at time $t_0^*$ (see curve 206).

When such situation may occur, it may be advantageous to binarize (step 318 of Figure 3a) the control data $Q^{i\,p}_t$ (curve 206) (i.e. to transform part of the curve into 0-1 signal - or at least into a signal having two possible values) into a new signal 207: a first value (e.g. 0) if the condition data is null / the well is closed - a second value (e.g. 1) if the condition data is non-null / the well is in operation.

Once this binarization performed, it is possible to determine (step 319 of Figure 3a) the quality value of the binarized signal 207 the same way the quality value has been determined for curve 201 in Figure 2a (i.e. by executing step 308 and 309 on the binarized signal).

For most of the time steps, the binarized signal is constant during the considered time step and therefore no modification of the provisional time step $L^*_n$ is requested. For time steps overlapping (at least) one change in the binarized signal (i.e. $L_1$ overlaps $t_{end}^*$, and $L_2$ overlaps $t_0^*$ in the example of Figure 2b), the process described in Figure 3b leads to modify the boundaries of said time steps to a position in time very close to these changes (e.g. $t_2$ is close to $t_{end}^*$, $t_3$ is close to $t_0^*$).

If the predetermined value is 0, the boundaries of said time steps are the positions in time of these changes.

As a consequence, it is possible to automatically create time steps closely aligned with the changes in production of the wells: the transitional period can be accurately simulated by the core module based on this time stepping method.

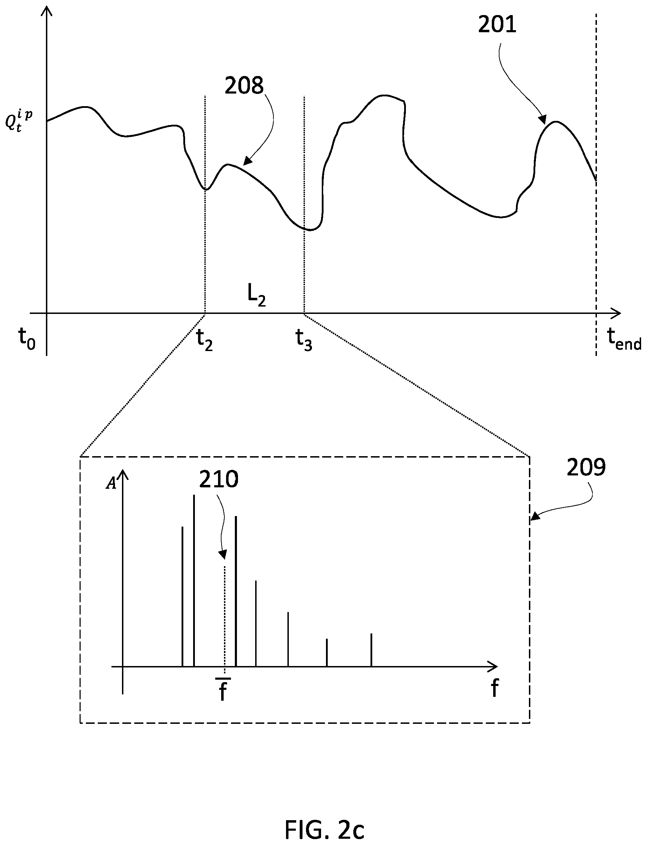

Figure 2c is a graph illustrating a third method of determination of a time step based on one possible embodiment of the invention.

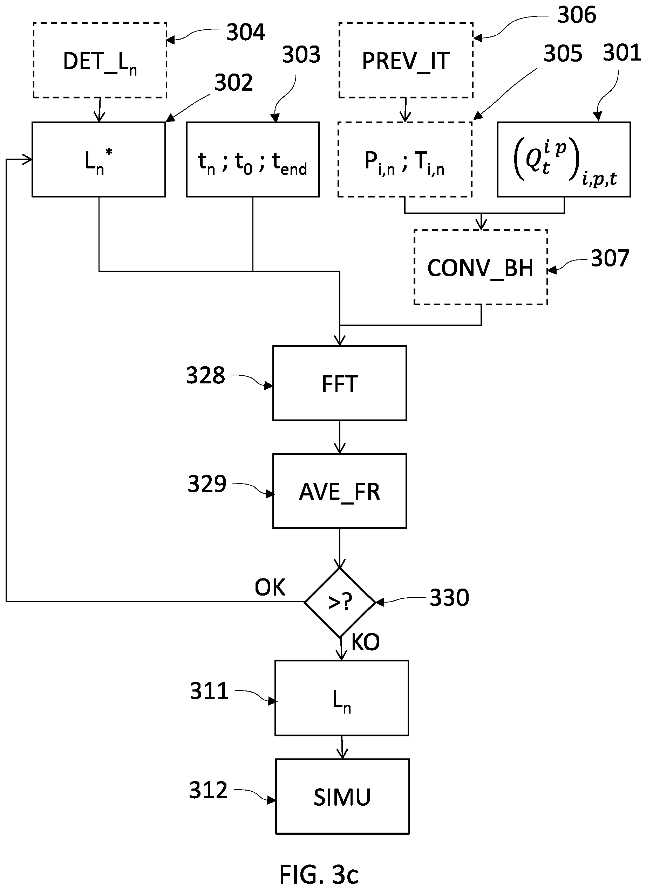

In Figure 2c, the process used is very close to the process that is used for Figure 2a: therefore, the flowchart of Figure 3c is identical to the flowchart of Figure 3a (and its associated description applies) as long as the numerical references are identical.

In this example, a frequency based method is presented to adapt the length of the provisional time step

$$L_n^*.$$

In particular, the step 308 is replaced by step 328, step 309 is replaced by step 329 and test 310 is replaced by step 330.

In step 328, the data 208 of the data of the control data $Q_t^{i\,p}$ that is applicable to the provisional time step $L_n^*$ (in the present case of Figure 2c, $L_2$) is selected and a time frequency transform is computed on said selected data. The transform may be illustrated in element 209 of Figure 2c.

Once said transform computed, it is possible to compute the average frequency 210 in this transform (step 329 of Figure 3c).

This average frequency 210 may act as the quality value described above.

As a consequence, the determination heuristic may be:

- if the average frequency 210 is greater than a predetermined value (step 330 of Figure 3c, output OK), the provisional time step $L_n^*$ is shorten and the process described in steps 328 and 329 of Figure 3c are reiterated.

- if the average frequency 210 is lower than the predetermined value (step 330 of Figure 3c, output KO), the provisional time step $L_n^*$ is taken as the time step $L_n$ (step 311 of Figure 3c) for the simulation by the core module (step 312 of Figure 3a). In addition, a mean of the control data applicable to time step $L_n$ may be computed to be to the core module.

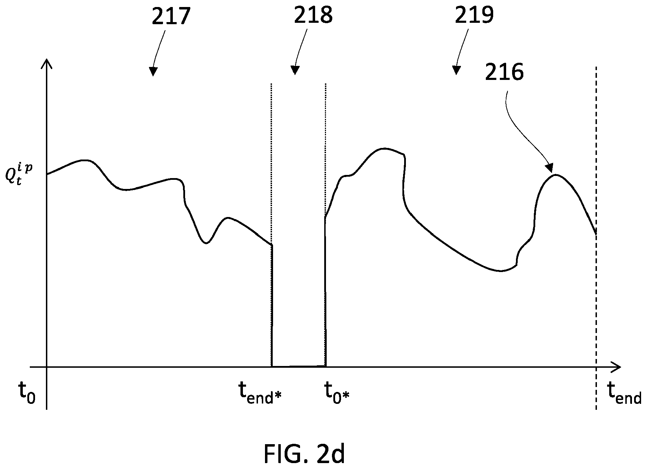

Figure 2d is a graph illustrating a fourth method of determination of a time step based on one possible embodiment of the invention.

In this example, the production of the well i may be stopped between time $t_{end}^*$ and $t_0^*$, i.e. the flow condition 216 of the well i is equal to 0 for a period of time $[t_{end}^* - t_0^*]$: $t_{end}^*$ and $t_0^*$ may be defined as "*operational transitions*".

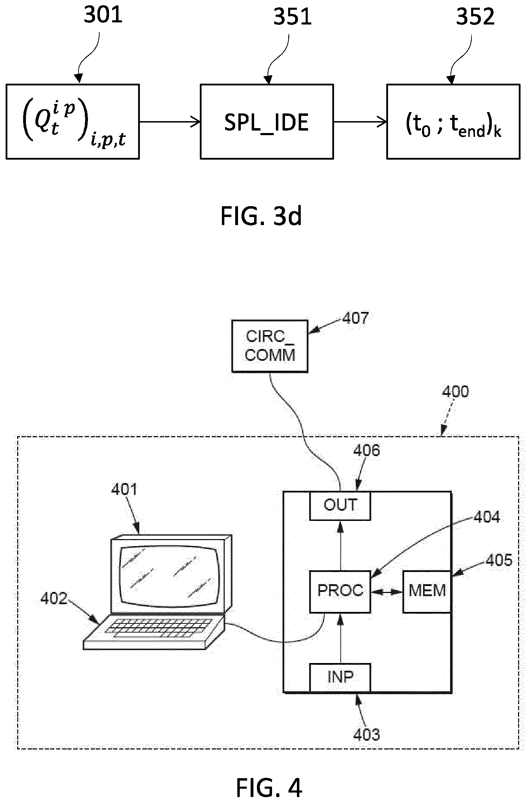

When such situation may occur, it may be advantageous to divide (step 351 in Figure 3d) the simulation period to-tend into sub-periods that do not have any "*operational transition*" in any well i. For instance, for the well i, the simulation period may be split into three sub-periods 217, 218, 219. If more than one well exists for the considered reservoir connected to the wells, the sub-periods should be adapted to satisfy said condition (no "*operational transition*") for every well.

The above described process(es) may then be run for every determined subperiod as the simulation period (step 352).

Figures 3a-3d are flow charts describing possible embodiments of the present invention as described above. Part(s) of these flow charts can represent steps of an example of a computer program which may be executed by the device of Figure 4.

It is noted that method of Figures 3a-3c may be executed individually, alternatively, consecutively (each outputted $L_n$ is used for $L_n^*$ in another method) or in parallel (the shorten outputted $L_n$ is used).

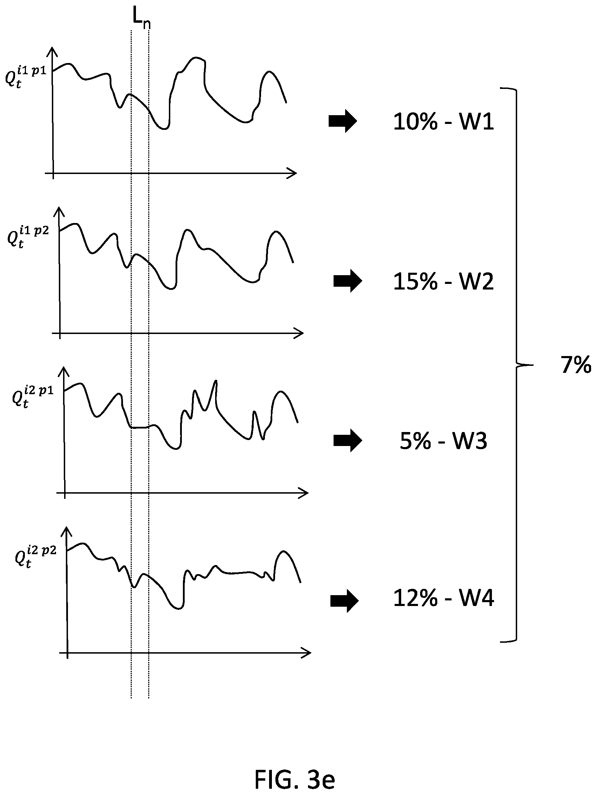

Figure 3e is an example of weighting quality values for a plurality of wells.

In the previous figures, a quality value is determined for a single well and for a single phase. If the considered reservoir has a plurality of wells connected to and/or a plurality of phases in the production flow (i.e. the index i of the control data $Q_t^{i\,p}$ may be greater than 1 and/or the index p of the control data $Q_t^{i\,p}$ may be greater than 1), it is possible to compute a "*global quality value*" for every well and for every phase taking into account every quality value of each well and each phase.

Therefore, the example of Figure 3e is only a small adaptation of steps 308-309, 318-319 and 328-329.

First, it is possible to determine the quality value for each well and each phase as described above for the time step $L_n$.

For instance:

- for well i1 and phase p1, having control data $Q_t^{i1\,p1}$, the computed quality value is 10% ;

- for well i1 and phase p2, having control data $Q_t^{i1\,p2}$, the computed quality value is 15% ;

- for well i2 and phase p1, having control data $Q_t^{i2\,p1}$, the computed quality value is 5% ;

- for well i2 and phase p2, having control data $Q_t^{i2\,p2}$, the computed quality value is 12%.

Once the quality value is determined for each well and each phase, it is possible to compute a global quality value as a weighted sum of the quality values (or quality sub-values) of each well and each phase.

For instance, by applying a weight of W1 for well i1 and phase p1, a weight of W2 for well i1 and phase p2, a weight of W3 for well i2 and phase p1, a weight of W4 for well i2 and phase p2, it is possible to determine that the global quality value is 7%:

$$\frac{10\% W1 + 15\% W2 + 5\% W3 + 13\% W4}{W1 + W2 + W3 + W4}$$

The weight may be a function of:

- the flow of the well i and of the phase p (e.g. the higher the flow is, the greater the weight is). This "flow" may be the mean of the flow during the whole simulation period or during the provisional time step $L_n^*$ or during any other time period;

- the strategic value of the well (e.g. the more important the well is regarding an economic value, the greater the weight is). This strategic value may be user-determined;

- etc.

Figure 4 is a possible embodiment for a device that enables the present invention.

In this embodiment, the device 400 comprise a computer, this computer comprising a memory 405 to store program instructions loadable into a circuit and adapted to cause circuit 404 to carry out the steps of the present invention when the program instructions are run by the circuit 404.

The memory 405 may also store data and useful information for carrying the steps of the present invention as described above.

The circuit 404 may be for instance:

- a processor or a processing unit adapted to interpret instructions in a computer language, the processor or the processing unit may comprise, may be associated with or be attached to a memory comprising the instructions, or

- the association of a processor / processing unit and a memory, the processor or the processing unit adapted to interpret instructions in a computer language, the memory comprising said instructions, or

- an electronic card wherein the steps of the invention are described within silicon, or

- a programmable electronic chip such as a FPGA chip (for « Field-Programmable Gate Array »).

This computer comprises an input interface 403 for the reception of data used for the above method according to the invention and an output interface 406 for providing the simulated model / flows to an external module 407.

To ease the interaction with the computer, a screen 401 and a keyboard 402 may be provided and connected to the computer circuit 404.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

**Claims**

1.  A method for optimizing a modeling of flows within a reservoir for optimization of oil/gas production, said modeling comprising a determination (103) of a time step within a simulation period, the method comprising:

    /a/ receiving (302) a first time step;

    **characterized in that** the method further comprises:

    /b/ receiving (301) control data (201, 206) applicable to said simulation period and comprising flow condition for at least one well connected to the reservoir;
    /c/ selecting data (204, 208) corresponding to the control data (201, 206) and that is applicable to the first time step;
    /d/ determining (309, 319, 329) at least one quality value based on the selected data;
    /e/ if a quality criterion is not met (310, 330) based on the quality value, determining a second time step within the first time step and reiterating step /c/ to /e/ with the second time step as the first time step;
    /f/ if the quality criterion is met (310, 330) based on the quality value, performing a modeling (104) of flows within the reservoir based on said first time step.

2.  The method according to claim 1, wherein the determination of the quality value comprises a determination of a root mean square error (309) of the selected data.

3.  The method according to claim 1 or 2, wherein the determination of the quality value comprises a determination of a mean absolute error (309) of the selected data.

4. The method according to one of the preceding claims, wherein the determination of the quality value comprises a determination of a mean frequency (210) of a frequency transform (209) of the selected data.

5. The method according to one of the preceding claims, wherein the quality criterion is not met if the quality value is greater than a predetermined value.

6. The method according to one of the preceding claims, wherein the method further comprises:

> /b2/ receiving pressure and temperature values (305) for a bottom hole of said at least one well connected to the reservoir;
> /b3/ converting (307) the selected data based on said received pressure and temperature values (305);

wherein the converted data is used for the determination of step /d/.

7. The method according to one of the preceding claims, wherein the determination of the quality value comprises a binarization (318) of at least the selected data.

8. The method according to one of the preceding claims, wherein the simulation period is determined to exclude (351) periods of time in which the at least one well ceases to have non-null flow condition or ceases to have a null flow condition.

9. The method according to one of claims 1-7, wherein the simulation period is split (351) into a plurality of simulation periods to exclude periods of time in which the at least one well ceases to have non-null flow condition or ceases to have a null flow condition.

10. The method according to one of the preceding claims, wherein the determination of the quality value comprises a determination of a respective quality sub-value for each of the wells, the quality value being determined based on a weighted sum of the respective quality sub-values.

11. The method according to claim 10, wherein respective weights of the weighted sum are functions of a flow of each well during the first time step or the simulation period.

12. A non-transitory computer readable storage medium, having stored thereon a computer program comprising program instructions, the computer program being loadable into a data-processing unit and adapted to cause the data-processing unit to carry out the steps of any of claims 1 to 11 when the computer program is run by the data-processing device.

13. A device for optimizing a modeling of flows within a reservoir for optimization of oil/gas production, said modeling comprising a determination of a time step within a simulation period,
the device comprising:

> /a/ an interface (403) for receiving a first time step;

**characterized in that** the device further comprises:

> /b/ an interface (403) for receiving control data applicable to said simulation period and comprising flow condition for at least one well connected to the reservoir;
> /c/ a first circuit (404) for executing an action of selecting data corresponding to the control data and that is applicable to the first time step;
> /d/ a second circuit (404) for executing an action of determining at least one quality value based on the selected data;
> /e/ a third circuit (404) for, if a quality criterion is not met based on the quality value, executing an action of determining a second time step within the first time step and for controlling the first circuit, the second circuit, the third circuit to execute their actions with the second time step as the first time step.
> /f/ a fourth circuit (404) for, if the quality criterion is met based on the quality value, performing a modeling of flows within the reservoir based on said first time step.

**Patentansprüche**

1. Verfahren zur Optimierung einer Strömungsmodellierung innerhalb eines Speichers zur Optimierung der Öl/Gas-Produktion, wobei die Modellierung eine Bestimmung (103) eines Zeitschritts innerhalb einer Simulationsperiode aufweist, wobei das Verfahren aufweist:

> /a/ Empfangen (302) eines ersten Zeitschritts;

**dadurch gekennzeichnet, dass** das Verfahren ferner aufweist:

> /b/ Empfangen (301) von Steuerdaten (201, 206), die auf die Simulationsperiode anwendbar sind und eine Strömungsbedingung für mindestens einen mit dem Speicher verbundenen Schacht aufweisen;

/c/ Auswählen von den Steuerdaten (201, 206) entsprechenden Daten (204, 208), die auf den ersten Zeitschritt anwendbar sind;

/d/ Bestimmen (309, 319, 329) mindestens eines Qualitätswerts auf Basis der ausgewählten Daten;

/e/ falls auf Basis des Qualitätswerts ein Qualitätskriterium nicht erfüllt wird (310, 330), Bestimmen eines zweiten Zeitschritts innerhalb des ersten Zeitschritts und wiederholen von Schritt /c/ bis /e/ mit dem zweiten Zeitschritt als dem ersten Zeitschritt;

/f/ falls auf Basis des Qualitätswerts das Qualitätskriterium erfüllt wird (310, 330), Durchführen einer Strömungsmodellierung (104) innerhalb des Speichers auf Basis des ersten Zeitschritts.

2. Verfahren nach Anspruch 1, wobei das Bestimmen des Qualitätswerts eine Bestimmung eines mittleren quadratischen Fehlers (309) der ausgewählten Daten aufweist.

3. Verfahren nach Anspruch 1 oder 2, wobei das Bestimmen des Qualitätswerts eine Bestimmung eines mittleren absoluten Fehlers (309) der ausgewählten Daten aufweist.

4. Verfahren nach einem der vorstehenden Ansprüche, wobei das Bestimmen des Qualitätswerts eine Bestimmung einer mittleren Frequenz (210) einer Frequenztransformation (200) der ausgewählten Daten aufweist.

5. Verfahren nach einem der vorstehenden Ansprüche, wobei das Qualitätskriterium nicht erfüllt ist, wenn der Qualitätswert größer als ein vorgegebener Wert ist.

6. Verfahren nach einem der vorstehenden Ansprüche, wobei das Verfahren ferner aufweist:

/b2/ Empfangen von Druck- und Temperaturwerten (305) für ein Bodenloch des mindestens einen mit dem Speicher verbundenen Schachts;

/b3/ Konvertieren (307) der ausgewählten Daten auf Basis der empfangenen Druck- und Temperaturwerte (305);

wobei die konvertierten Daten für die Bestimmung von Schritt /d/ verwendet werden.

7. Verfahren nach einem der vorstehenden Ansprüche, wobei das Bestimmen des Qualitätswerts eine Binärisierung (318) mindestens der ausgewählten Daten aufweist.

8. Verfahren nach einem der vorstehenden Ansprüche, wobei die Simulationsperiode bestimmt wird, um Zeitperioden auszuschließen (351), in denen eine Nichtnull-Strömungsbedingung des mindestens einen Schachts endet oder eine Null-Strömungsbedingung des mindestens einen Schachts endet.

9. Verfahren nach einem der Ansprüche 1 bis 7, wobei die Simulationsperiode in mehrere Simulationsperioden unterteilt wird (351), um Zeitperioden auszuschließen, in denen eine Nichtnull-Strömungsbedingung des mindestens einen Schachts endet oder eine Null-Strömungsbedingung des mindestens einen Schachts endet.

10. Verfahren nach einem der vorstehenden Ansprüche, wobei die Bestimmung des Qualitätswerts eine Bestimmung eines jeweiligen Sub-Qualitätswerts für jeden der Schächte aufweist, wobei der Qualitätswert auf Basis einer gewichteten Summe der jeweiligen Sub-Qualitätswerte bestimmt wird.

11. Verfahren nach Anspruch 10, wobei jeweilige Gewichte der gewichteten Summe Funktionen einer Strömung jedes Schachts während des ersten Zeitschritts oder der Simulationsperiode sind.

12. Nichtflüchtiges computerlesbares Speichermedium mit einem darauf gespeicherten Computerprogramm, das Programmbefehle aufweist, wobei das Computerprogramm in eine Datenverarbeitungseinheit geladen werden kann und konfiguriert ist, die Datenverarbeitungseinheit zu veranlassen, die Schritte nach einem der Ansprüche 1 bis 11 auszuführen, wenn die Datenverarbeitungseinheit das Computerprogamm ablaufen lässt.

13. Vorrichtung zur Optimierung einer Strömungsmodellierung innerhalb eines Speichers zur Optimierung der Öl/Gas-Produktion, wobei die Modellierung eine Bestimmung eines Zeitschritts innerhalb einer Simulationsperiode aufweist, wobei die Vorrichtung aufweist:

/a/ eine Schnittstelle (403) zum Empfangen eines ersten Zeitschritts;

**dadurch gekennzeichnet, dass** die Vorrichtung ferner aufweist:

/b/ eine Schnittstelle (403) zum Empfangen von Steuerdaten, die auf die Simulationsperiode anwendbar sind und eine Strömungsbedingung für mindestens einen mit dem Speicher verbundenen Schacht aufweisen;

/c/ eine erste Schaltung (404) zum Ausführen einer Aktion eines Auswählens von den Steuerdaten entsprechenden Daten, die auf den ersten Zeitschritt anwendbar sind;

/d/ eine zweite Schaltung (404) zum Ausführen einer Aktion einer Bestimmung mindestens eines Qualitätswerts auf Basis der ausgewählten Daten;

/e/ eine dritte Schaltung (404) zum, im Fall, dass ein Qualitätskriterium auf Basis des Qualitätswerts nicht erfüllt wird, Ausführen einer Aktion einer Bestimmung eines zweiten Zeitschritts innerhalb des ersten Zeitschritts und zur Steuerung der ersten Schaltung, der zweiten Schaltung, der dritten Schaltung, um ihre Aktionen mit dem zweiten Zeitschritt als dem ersten Zeitschritt auszuführen;

/f/ eine vierte Schaltung zum, im Fall, dass das Qualitätskriterium auf Basis des Qualitätswerts erfüllt wird, Durchführen einer Strömungsmodellierung innerhalb des Speichers auf Basis des ersten Zeitschritts.

**Revendications**

1. Procédé d'optimisation d'une modélisation d'écoulements au sein d'un réservoir pour une optimisation de la production de pétrole/gaz, ladite modélisation comprenant une détermination (103) d'un pas de temps dans une période de simulation, le procédé comprenant :

/a/ la réception (302) d'un premier pas de temps ;

**caractérisé en ce que** le procédé comprend en outre :

/b/ la réception (301) de données de commande (201, 206) applicables à ladite période de simulation et comprenant une condition d'écoulement pour au moins un puits relié au réservoir ;
/c/ la sélection de données (204, 208) correspondant aux données de commande (201, 206) et qui sont applicables au premier pas de temps ;
/d/ la détermination (309, 319, 329) d'au moins une valeur de qualité sur la base des données sélectionnées ;
/e/ si un critère de qualité n'est pas satisfait (310, 330) sur la base de la valeur de qualité, la détermination d'un second pas de temps dans le premier pas de temps et la réitération des étapes /c/ à /e/ avec le second pas de temps comme premier pas de temps ;
/f/ si le critère de qualité est satisfait (310, 330) sur la base de la valeur de qualité, la réalisation d'une modélisation (104) d'écoulements au sein du réservoir sur la base dudit premier pas de temps.

2. Procédé selon la revendication 1, dans lequel la détermination de la valeur de qualité comprend une détermination d'une erreur quadratique moyenne (309) des données sélectionnées.

3. Procédé selon la revendication 1 ou 2, dans lequel la détermination de la valeur de qualité comprend une détermination d'une erreur absolue moyenne (309) des données sélectionnées.

4. Procédé selon l'une des revendications précédentes, dans lequel la détermination de la valeur de qualité comprend une détermination d'une fréquence moyenne (210) d'une transformée de fréquence (209) des données sélectionnées.

5. Procédé selon l'une des revendications précédentes, dans lequel le critère de qualité n'est pas satisfait si la valeur de qualité est plus grande qu'une valeur prédéterminée.

6. Procédé selon l'une des revendications précédentes, dans lequel le procédé comprend en outre :

/b2/ la réception de valeurs de pression et de température (305) pour un fond de trou dudit au moins un puits relié au réservoir ;
/b3/ la conversion (307) des données sélectionnées sur la base desdites valeurs de pression et de température reçues (305) ;

dans lequel les données converties sont utilisées pour la détermination de l'étape /d/.

7. Procédé selon l'une des revendications précédentes, dans lequel la détermination de la valeur de qualité comprend une binarisation (318) d'au moins les données sélectionnées.

8. Procédé selon l'une des revendications précédentes, dans lequel la période de simulation est déterminée pour exclure (351) des périodes de temps dans lesquelles l'au moins un puits cesse d'avoir une condition d'écoulement non nulle ou cesse d'avoir une condition d'écoulement nulle.

9. Procédé selon l'une des revendications 1 à 7, dans lequel la période de simulation est scindée (351) en une pluralité de périodes de simulation pour exclure des périodes de temps dans lesquelles l'au moins un puits cesse d'avoir une condition d'écoulement non nulle ou cesse d'avoir une condition d'écoulement nulle.

10. Procédé selon l'une des revendications précédentes, dans lequel la détermination de la valeur de qualité comprend une détermination d'une sous-valeur de qualité respective pour chacun des puits, la valeur de qualité étant déterminée sur la base d'une somme pondérée des sous-valeurs de qualité respectives.

11. Procédé selon la revendication 10, dans lequel des poids respectifs de la somme pondérée sont des fonctions d'un écoulement de chaque puits pendant le premier pas de temps ou la période de simulation.

12. Support de stockage non transitoire lisible par ordinateur, stockant un programme d'ordinateur comprenant des instructions de programme, le programme d'ordinateur pouvant être chargé dans une unité de traitement de données et adapté pour amener l'unité de traitement de données à réaliser les étapes de l'une quelconque des revendications 1 à 11 lorsque le programme d'ordinateur est exécuté par le dispositif de traitement de données.

13. Dispositif d'optimisation d'une modélisation d'écoulements au sein d'un réservoir pour une optimisation de la production de pétrole/gaz, ladite modélisation comprenant une détermination d'un pas de temps dans une période de simulation, le dispositif comprenant :

    /a/ une interface (403) pour recevoir un premier pas de temps ;

    **caractérisé en ce que** le dispositif comprend en outre :

    /b/ une interface (403) pour recevoir des données de commande applicables à ladite période de simulation et comprenant une condition d'écoulement pour au moins un puits relié au réservoir ;
    /c/ un premier circuit (404) pour exécuter une action de sélection de données correspondant aux données de commande et qui sont applicables au premier pas de temps ;
    /d/ un deuxième circuit (404) pour exécuter une action de détermination d'au moins une valeur de qualité sur la base des données sélectionnées ;
    /e/ un troisième circuit (404) pour, si un critère de qualité n'est pas satisfait sur la base de la valeur de qualité, exécuter une action de détermination d'un second pas de temps dans le premier pas de temps et pour commander le premier circuit, le deuxième circuit, le troisième circuit pour exécuter leurs actions avec le second pas de temps comme premier pas de temps ;
    /f/ un quatrième circuit (404) pour, si le critère de qualité est satisfait sur la base de la valeur de qualité, réaliser une modélisation d'écoulements au sein du réservoir sur la base dudit premier pas de temps.

101

102

M

$\left(Q_t^{i\,p}\right)_{i,p,t}$

103

TIM_STE

104

COR_SIM

105

E?

106

OUTP

FIG. 1

FIG. 2a

FIG. 2b

FIG. 2c

217    218    219    216

$Q_t^{ip}$

$t_0$    $t_{end*}$    $t_{0*}$    $t_{end}$

FIG. 2d

FIG. 3a

FIG. 3b

304 DET_L$_n$

303

306 PREV_IT

305 301

302 L$_n$*

$t_n$ ; $t_0$ ; $t_{end}$

P$_{i,n}$ ; T$_{i,n}$

$\left(Q_t^{i\,p}\right)_{i,p,t}$

CONV_BH 307

328 FFT

329 AVE_FR

OK

>? 330

KO

311 L$_n$

312 SIMU

FIG. 3c

FIG. 3e

301          351          352

$$\left(Q_t^{i\,p}\right)_{i,p,t} \quad\longrightarrow\quad SPL\_IDE \quad\longrightarrow\quad (t_0\,;\,t_{end})_k$$

FIG. 3d

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012179436 A1
- WO 2008036982 A1